# EUROPEAN PATENT SPECIFICATION

(11) **EP 1 357 016 B1**
(45) Date of publication and mention of the grant of the patent: **07.09.2005**
(21) Application number: 02014105.7
(22) Date of filing: 24.06.2002
(51) Int. Cl.: B62D 21/15

(54) **Side member for use in vehicle frame and method of manufacturing the same**
Seitenelement für Fahrzeugrahmen und Verfahren für dessen Herstellung
Montant latéral pour l'ossature de véhicule et procédé pour sa production

(30) Priority: 18.04.2002 KR 2002021337
(43) Date of publication of application: 29.10.2003
(73) Proprietor: KIA MOTORS CORPORATION, Seoul 137-938 (KR)
(72) Inventor: Kim, Koo-Hyun, Shiheung-shi, Kyonggi-do 429-450 (JP)
(74) Representative: Viering, Jentschura & Partner

(56) References cited:
- EP-A- 1 104 857
- WO-A-00/30916
- US-A- 6 062 632
- KIM K H ET AL: "AXIAL CRUSH AND ENERGY ABSORPTION CHARACTERISTICS OF ALUMINUM/GFRP HYBRID SQUARE TUBE" , KEY ENGINEERING MATERIALS, AEDERMANNSDORF, CH, VOL. 183-187, NR. PART 2, PAGE(S) 1147-1152 XP008007482 * the whole document *

## Description

### BACKGROUND OF THE INVENTION

### Field of the Invention

The present invention relates to a vehicle frame.

### Background of the Prior Art

Generally, a bumper structure of a vehicle includes bumper brackets mounted on each front of side members through bumper stay reinforcements. When the vehicle is involved in a front-end collision, the front side members and the bumper brackets are collapsed in a longitudinal direction thereof to absorb the energy of impact.

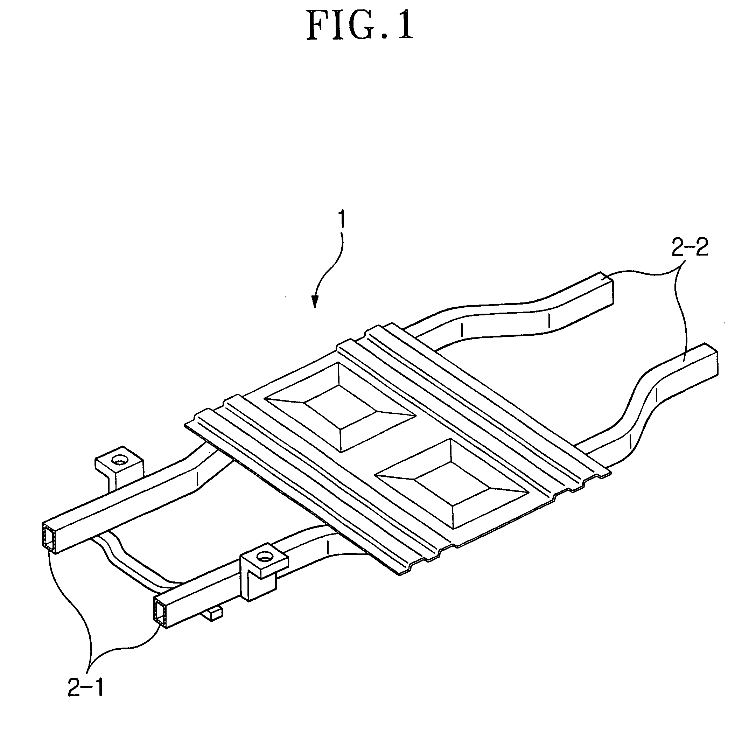

As shown in Fig. 1, side members 2-1 and 2-2 are disposed at the front and rear of a vehicle frame 1. The side member has a box shape of closed-sectional member, and is extended in a longitudinal direction of the vehicle frame. In particular, the front side member 2-1 is one component of a vehicle body, and has to have rigidity sufficient to prevent the engine from penetrating into a cabin and protect the vehicle body upon the front collision. In addition, a reinforcing member may be added to a structurally weakened portion to increase the rigidity.

The front side member 2-1 has to have impact safety capable of preventing passengers from being injured by absorbing impact energy originating from the collision.

In order to provide the side members 2-1 and 2-2 with the rigidity and the impact safety, studies on the selection of material or the structural design have been carried out, but there are considerably hard tasks. Further, the increased demand of the lightweight vehicle causes the task to be more hard.

In regard to the lightweight side member, one of several attempts is a use of a high strength steel plate. Because the side member has to ensure the sufficient rigidity to support a power train and a suspension mounting, without lowering the absorbing capacity of impact energy, the attempt has several problems to be solved.

Other attempt for reducing the weight of the vehicle frame is to make the side member using fiber reinforced plastics. It is difficult for the fiber reinforced plastics to absorb a continuous impact load, since it has a characteristic of brittleness fracture. Accordingly, in order to achieve the stable collapse of the side member, the closed-sectional tube is machined to have a pointed end by use of a trigger mechanism. In addition, if a direction of the impact load applied to the side member does not coincide with an axial direction of the side member (the side member is applied with a bending load), there is a tendency for the fiber reinforced plastics to have poor energy absorbing ability.

In order to address the unstable collapse of the side member, and also, provide it with a lightweight and good energy absorption capacity, the inventors suggested a vehicle frame with a side member comprising a hybrid tube structure manufactured by laminating glass fiber reinforced plastics (GFRP) on an outer circumference of an aluminum tube and simultaneously curing the GFRP. See Axial Crush and Energy Absorption Characteristics of Aluminum/GFRP hybrid Square Tubes, Key Engineering Materials, Vol. 183-187, Nr. part 2, pages 1147-1152. According to the structure of the tube, the brittleness of the GFRP is affected by a ductile property of aluminum, thereby resulting in the stable collapse in the tube. The cooperation of two materials causes the absorption capability per unit mass to be increased.

According to a method of manufacturing the above hybrid side member, glass 2 fiber/epoxy prepreg (semi-curing state of glass fiber and epoxy) is directly multiply wound around the outer circumference of the aluminum tube, and is then cured by an autoclave (curing oven of high temperature and pressure), thereby providing some drawbacks in that the productivity is low and the manufacturing cost is high. In addition, the method of manufacturing the entire side member by employing the above process more increases the cost, thereby reducing the practical use.

### SUMMARY OF THE INVENTION

Accordingly, the present invention is directed to a vehicle frame, which can be manufactured and, in case of an axial crash, be repaired at reduced cost and which provides for good axial crash characteristics.

This is achieved by a vehicle frame according to claim 1.

A method of manufacturing the side member of the vehicle frame preferably comprises the steps of: preparing a hybrid tube having a dual structure including an interior aluminum tube and an exterior hybrid tube made of a glass fiber reinforced composite material; and connecting the hybrid tube to a steel tube.

The preparing step comprises the steps of: forming a fiber preform enclosing an outer circumference of the interior aluminum tube; impregnating a resin into the preform; and curing the resin impregnated in the preform.

The fiber preform is formed by winding a glass fiber mat around the outer circumference of the aluminum tube. The glass fiber mat comprises a continuous strand mat and a random chopped strand mat.

The resin is an unsaturated polyester, preferably, a thermosetting resin.

The connecting step comprises the steps of inserting one end of the hybrid tube into an end of the steel tube to such an extent that the steel tube is partially superposed on the hybrid tube, and fastening the superposed portion of the steel tube and hybrid tube by a fastening member.

The aluminum tube with the preform formed is inserted into a mold, and the resin is introduced into the mold under a pressured state to impregnate the resin.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

Fig. 1 is a perspective view of a conventional vehicle frame;

Fig. 2 is a perspective view of a side frame according to a preferred embodiment of the present invention;

Fig. 3 is an exploded perspective view of a side frame according to a preferred embodiment of the present invention; and

Fig. 4 is a cross sectional view taken along a line A-A' of Fig. 2

### DETAILED DESCRIPTION OF THE PREFERRED EMBODIMENTS

Reference will now be made in detail to a preferred embodiment of the present invention.

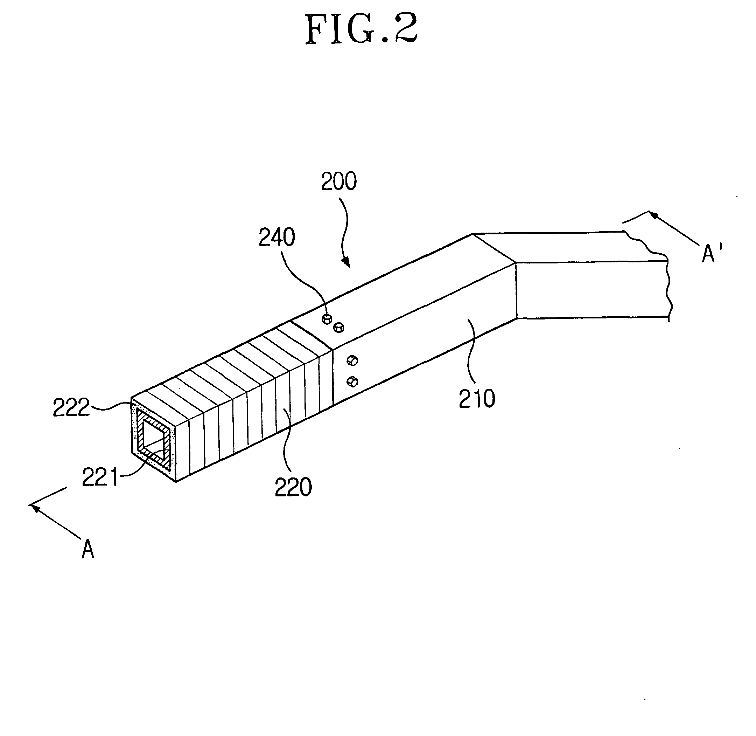

Figs. 2 to 4 show a side member according to a preferred embodiment of the present invention.

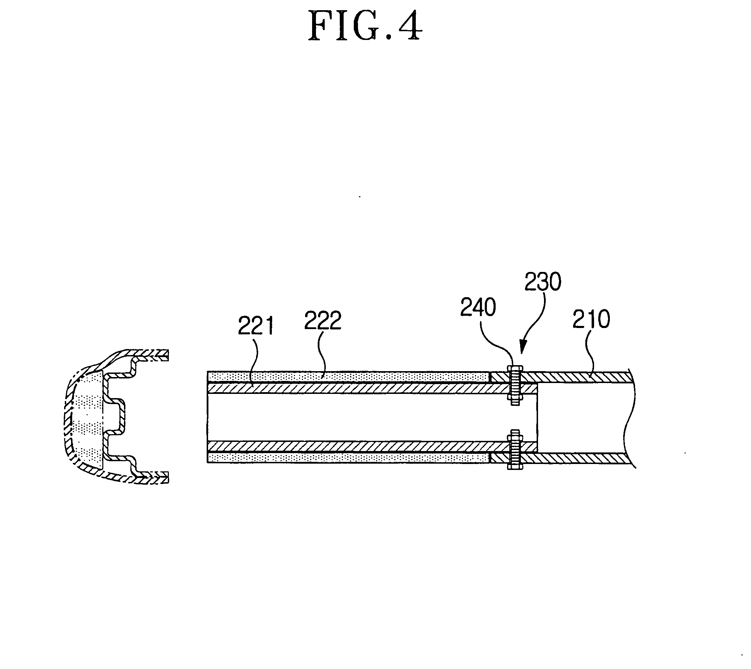

The side member 200 of the present invention comprises, as shown in Figs. 2 to 4, a steel tube 210 made of a high strength steel plate, and a hybrid tube 220 disposed between the steel tube 210 and a bumper (shown by a two-dotted line in Fig. 4) and connected to the steel bumper.

The hybrid tube 220 of the present invention has a dual structure including of an interior aluminum tube 221 and an exterior hybrid tube 222 made of a glass fiber reinforced composite material.

The steel tube 210 and the hybrid tube 220 of the present invention may have a circular or rectangular closed-sectional structure, like as a tube for the conventional side member.

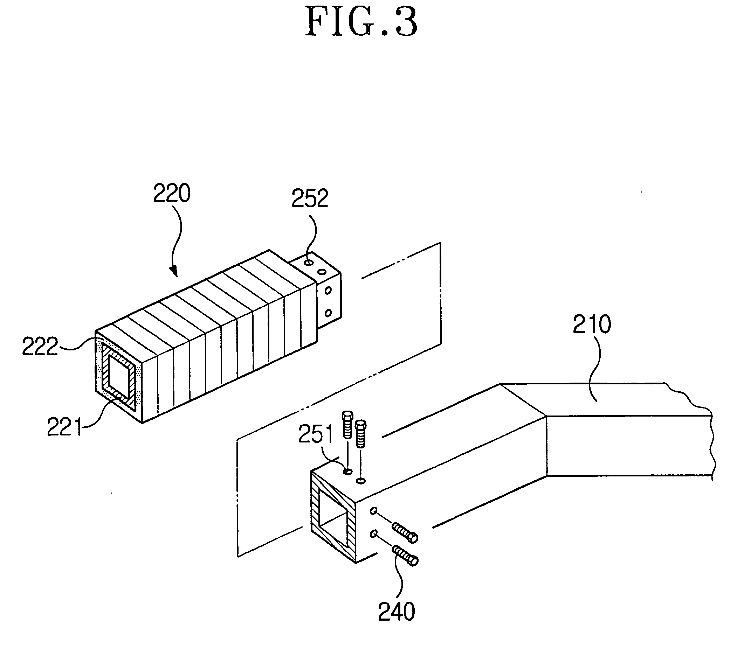

The connection of the steel tube 210 and the hybrid tube 220 is achieved, as shown in Figs 3 and 4, by inserting one end of the hybrid tube 220 into an end of the steel tube to such an extent that the steel tube is partially superposed on the hybrid tube, and fastening a superposed portion 230 of the steel tube and hybrid tube by use of at least one, preferably at least two, fastening member (e.g., bolt/nut or rivet). To this end, the tubes 210 and 220 are provided at the superposed portion 230 with at least one, preferably at least two, fastening holes 251 and 252 for receiving the bolt or rivet. Accordingly, it is preferable to no laminate the glass fiber reinforced composite material on the end of the hybrid tube which is inserted in the steel tube 210.

Since the hybrid tube 220 of the present invention has the dual structure including of the interior aluminum tube 221 and the exterior tube 222 made of the glass fiber reinforced composite material, the cooperation of the aluminum and the glass fiber reinforced composite material may absorb the impact energy in a stable collapse mode. In addition, in case of a low speed collision unnecessary for replacing the entire side member, only the hybrid tube 222 may be replaced, thereby reducing a service expense.

A method of manufacturing the side member of the present invention will now be described.

The hybrid tube 222 of the present invention is manufactured by a resin transfer molding (RTM) method, by which after a stiffener is previously disposed in a mold, the resin is impregnated and cured by applying a pressure from the exterior, thereby forming it. This method can manufacture an article of a good mechanical property in high productivity, and can easily form a large-size component of complicated shape. In addition, a physical property of the article can be improved by regulating amount and orientation of the stiffener.

A preform suitable for a shape of a mold has to be made by use of a binder. The preform is formed by winding glass wool, such as continuous strand mat or random chopped strand mat, around an outer circumference of the aluminum tube 221 prepared previously. In this case, it is preferable to measure permeability of the preform so as to predict resin flow in the mold.

The aluminum tube with the preform formed is disposed within the mold, and is applied with a pressure from the exterior so that the resin is impregnated into the preform. And then, the impregnated preform is cured. The used resin is unsaturated polyester, i.e., a thermosetting resin having a relative low viscosity (100 to 1000 cP). Since the unsaturated polyester can be impregnated with a low pressure, it is possible to simplify a forming mechanism and mold of a molding machine, and reduce molding expenses relative to injection molding or compression molding.

A major process exerting an influence on the productivity of resin transfer molding process is impregnating and curing processes. Conditions such as pressure, temperature and viscosity and so forth have to be considered at the impregnation of the resin, and to be optimized to obtain the rapid curing and flow by regulating the pressure and temperature.

The hybrid tube 220 made as described above is connected to the steel tube 210 prepared previously. The connection of the steel tube 210 and the hybrid tube 220 is achieved, as described above, by inserting one end of the hybrid tube 220 into the hollow end of the steel tube to such an extent that the steel tube is partially superposed on the hybrid tube, and fastening the superposed portion 230 of the steel tube and hybrid tube through a fastening method such as rivet coupling, bolt/nut fastening, or welding. To the end, the tubes 210 and 220 are provided at the superposed portion 230 with a number of fastening holes 251 and 252.

With the construction described above, since the hybrid tube of the present invention has the dual structure including of the interior aluminum tube and the exterior tube made of the glass fiber reinforced composite material, the cooperation of the aluminum and the glass fiber reinforced composite material may absorb the impact energy in a stable collapse mode In addition, in case of a low speed collision unnecessary for replacing the entire side member, only the hybrid tube 222 may be replaced, thereby reducing a service expense. Furthermore, the front portion of the side member is replaced with the present invention, thereby increasing the lightweight effect. Also, the RTM process is very advantageous to the mass production and cost reduction.

The forgoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A vehicle frame comprising an elongated side member (200) extending in longitudinally direction of the vehicle frame, and a bumper which is connected to a longitudinal end of the side member (200), the side member (200) being constituted by a steel tube (210) made of a high strength steel plate and a hybrid tube (220) which has a dual structure including an inner tube (221) of aluminium and an exterior tube (222) made of glass fiber reinforced composite material and formed on the outer circumference of the inner tube (221), wherein the hybrid tube (220) is inserted with one longitudinal end into that longitudinal end of the steel tube (210) which faces the bumper so that the hybrid tube (220) forms a longitudinal elongation of the steel tube (210) with the bumper being connected to the other longitudinal end of the hybrid tube (220), wherein that longitudinal end of the hybrid tube (220) which is inserted into the steel tube (210) is free of glass fiber reinforced composite material with only the inner tube (221) extending into the steel tube (210) and with the front face of the exterior tube (222) facing the corresponding front face of the steel tube (210), and wherein the superposed portion of the steel tube (210) and the hybrid tube (220) is fastened by a fastening member (240).

## Patentansprüche

1. Fahrzeugrahmen, aufweisend ein langgestrecktes Seitenelement (200), welches sich in Längsrichtung des Fahrzeugrahmens erstreckt, und einen Stoßfänger, welcher an ein Längsende des Seitenelements (200) angeschlossen ist, wobei das Seitenelement (200) von einem Stahlrohr (210) ausgebildet ist, welches aus einer hochfesten Stahlplatte und einem Hybridrohr (220) gemacht ist, welches eine Dualstruktur hat, mit einem Innenrohr (221) aus Aluminium und einem Außenrohr (222), welches aus glasfaserverstärktem Kompositmaterial gemacht ist und welches an dem Außenumfang des Innenrohrs (221) ausgebildet ist, wobei das Hybridrohr (220) mit einem Längsende in jenes Längsende des Stahlrohrs (210) eingesetzt ist, welches dem Stoßfänger zugewandt ist, sodass das Hybridrohr (220) eine Längsverlängerung des Stahlrohrs (210) ausbildet, wobei der Stoßfänger an das andere Längsende des Hybridrohrs (220) angeschlossen ist, wobei jenes Längsende des Hybridrohrs (220), welches in das Stahlrohr (210) eingesetzt ist, frei von glasfaserverstärktem Kompositmaterial ist, wobei sich nur das Innenrohr (221) in das Stahlrohr (210) erstreckt und wobei die vordere Stirnfläche des Außenrohrs (222) der korrespondierenden vorderen Stirnfläche des Stahlrohrs (210) zugewandt ist, und wobei der Überdeckungsabschnitt des Stahlrohrs (210) und des Hybridrohrs (220) mittel eines Befestigungselements (240) befestigt sind.

## Revendications

1. Châssis de véhicule comprenant un montant latéral allongé (200) se prolongeant dans la direction longitudinale du châssis de véhicule, et un pare-chocs relié à une extrémité longitudinale du montant latéral (200), le montant latéral (200) étant constitué par un tube d'acier (210) fabriqué dans une tôle d'acier haute résistance et par un tube hybride (220) ayant une double structure comprenant un tube interne (221) en aluminium et un tube externe (222) composé de matériau composite renforcé en fibres de verre et formé sur la circonférence externe du tube interne (221), dans lequel le tube hybride (220) est inséré par une extrémité longitudinale dans l'extrémité longitudinale du tube d'acier (210) faisant face au pare-chocs de sorte que le tube hybride (220) forme un prolongement longitudinal du tube d'acier (210), le pare-chocs étant relié à l'autre extrémité longitudinale du tube hybride (220), dans lequel cette extrémité longitudinale du tube hybride (220) qui est insérée dans le tube d'acier (210) ne comporte pas de matériau composite renforcé en fibres de verre, seul le tube interne (221) se prolongeant dans le tube d'acier (210) et la face avant du tube externe (222) faisant face à la face avant correspondante du tube d'acier (210), et dans lequel la partie superposée du tube d'acier (210) et du tube hybride (220) est fixée par un élément de fixation (240).
